# EUROPEAN PATENT APPLICATION

(11) **EP 2 797 217 A1**
(43) Date of publication of application: **29.10.2014**
(21) Application number: 13164815.6
(22) Date of filing: 23.04.2013
(51) Int. Cl.: H02M 7/23, G08C 23/04, H02M 1/08, H02M 7/483

(54) **Distributed controllers for a power electronics converter**

(71) Applicant: ABB Technology AG, 8050 Zürich (CH)
(72) Inventor: Dujic, Drazen, 5430 Wettingen (CH); Mester, Akos, 5415 Nussbaumen (CH); Celli, Roberto, 5432 Neuenhof (CH)
(74) Representative: ABB Patent Attorneys

(57) **Abstract**

A distributed controller module (50) for controlling a power electronics building block (30) of a power electronics converter (10) comprises a plurality of gate drivers (78) for controlling power electronics switches of the power electronics building block (30); a first fiber optics communication interface (74) for communication with a central controller module (58); a second fiber optics communication interface (76) for communication with a second distributed controller module (50b) for controlling a second power electronics building block (32) of the power electronics converter (10); a processor unit (70) for controlling the gate drivers (78) and transmitting and receiving data via the first fiber optics communication interface (74) and the second fiber optics communication interface (76).

## Description

### FIELD OF THE INVENTION

The invention relates to the field of the control of high power semiconductor devices. In particular, the invention relates to a distributed controller module for a power electronics converter, a method for distributing control data in a power electronics converter, a control system for a power electronics converter and a power electronics converter.

### BACKGROUND OF THE INVENTION

Power electronics converters usually comprise a large amount of power semiconductor switches that are used for switching the currents to be processed by the converter. These switches are controlled by control components with low power electronics that may measure data relating to the switched currents, may derive switching schemas for the switches and may accordingly operate the power semiconductors.

Various electrical isolation requirements have to be considered on both the power processing part (i.e. the power semiconductors) and the signal processing part (i.e. the low power electronics). Regarding the control components, this may result in a large number of fiber optics connections in between various electronic boards. As the converter becomes more modular and as the number of modules increases to meet higher voltages, so does the number of fiber optics connections. This may have negative impact on the costs, the complexity and the reliability of the control system of the converter.

### DESCRIPTION OF THE INVENTION

It is an object of the invention to provide a power electronics converter with a simple and easy to maintain control system.

This object is achieved by the subject-matter of the independent claims. Further exemplary embodiments are evident from the dependent claims and the following description.

A first aspect of the invention relates to a distributed controller module for controlling a power electronics building block of a power electronics converter.

A distributed controller module may be an integrated component of the converter that is responsible for the control of a specific part of the converter (i.e. the power electronics building block). A converter may comprise a plurality of power electronics building blocks and associated distributed controller modules. The distributed controller modules may be controlled by a central controller module.

A module, for example a distributed controller module and/or a central controller module, may be a component of the power electronics converter that may be inserted as a whole in the power electronics converter. For example, a module may comprise a common housing or a common support for its members. A module may comprise a board for housing and supporting the components of the module.

A power electronics building block may be a component or module of the power electronics converter that comprises a plurality of power electronics semiconductor switches and optionally their associated gate controllers (which also may be called gate drivers). A power electronics building block may also comprise further components of the controller hardware of the power electronics converter such as the distributed controller module that, for example, may be integrated into the power electronics building block.

A power electronics converter may be a medium voltage converter that may be adapted for converting currents of more than 100 A and/or more than 1.000 V (for example more than 500 A and/or more than 5.000 V).

An electronics converter may be a current converter that is adapted for converting a first AC or DC current into a second AC or DC current. I.e. the converter may be a DC-to-DC converter, a AC-to-DC converter, a DC-to-AC converter or an AC-to-AC converter. In the case an AC current is converted into an AC current, the currents may have different frequencies. It is furthermore possible that the currents have more than one phase.

According to an embodiment of the invention, the distributed controller module comprises a plurality of gate drivers for controlling power electronics switches of the power electronics building block; a first fiber optics communication interface for communication with a central controller module, the central controller module for controlling the power electronics converter; a second fiber optics communication interface for communication with a second distributed controller module for controlling a second power electronics building block of the power electronics converter; and a processor unit for controlling the gate drivers and transmitting and receiving data via the first fiber optics communication interface and the second fiber optics communication interface.

All the gate drives for the power electronics building block may be integrated into the distributed controller module. By an integration of the gate driver functionality closely with the other control hardware on one control board, higher level of integration may be achieved and a required wiring may be reduced as well.

The distributed controller module may comprise a first communication interface that is adapted for sending measurement data and control data to a central controller or for receiving such data from the central controller. The distributed controller module may comprise a second communication interface that is adapted to send and receive such data from a second distributed controller module that may be equally designed as the (first) distributed controller module. In such a way, the distributed controller module may forward data from the central controller module to the second distributed controller module and vice versa and further wiring may be saved.

It has to be noted that the distributed controller module may comprise at least two communication interfaces, i.e. at least one communication interface for communication with a central controller module and at least one communication interface for communication with another distributed controller module. In such a way, the distribute controller module may indirectly interconnect the central controller module and a further, second distributed controller module.

Also a processor unit for computational tasks that, for example is based on an FPGA, a DSP and/or a microcontroller, is integrated into the distributed controller module. On the processor unit, software may be run that controls the other components of the distributed controller module (like the communication interfaces and the gate drivers) and that evaluates control and measurement data from the associated and other power electronics building blocks.

A unit, for example the processor unit, may be a subcomponent of the distributed controller module that is integrated with the other components of the distributed controller module.

Summarized, the distributed controller module may be a component of the power electronics converter that may be integrated into a power electronics building block near the power semiconductors of the power electronics building block and that need not be galvanically separated from the electric potential of the power electronics building block.

With such a distributed controller module, the signal wiring in the converter may be simplified, the burden on the central controller module may be reduced, and the reliability of the converter may be improved.

According to an embodiment of the invention, the plurality of gate drivers, the first fiber optics communication interface, the second fiber optics communication interface and the processor unit are arranged in one assembly, for example on one controller board. The same or nearly equally designed distributed controller modules may be used as control components for different components of the converter.

According to an embodiment of the invention, the distributed controller module further comprises a measurement unit (on the same board) for sensing measurement data of the power electronics building block. The processor unit may be adapted for processing the measurement data and to control the gate drives based on the processed measurement data. The distributed controller module may provide a measurement interface to process signals coming from a plurality of transducers, may perform measurements locally and may perform local control functions, without any communication to other parts of the system.

According to an embodiment of the invention, the distributed controller module further comprises a power supply (on the same board) for supplying the distributed controller module with low voltage power. The power supply may be adapted to generate the low voltage power from a current processed by the power electronics building block. For example, the low voltage power may be generated from energy storage elements like capacitors. The auxiliary power supply unit may be directly connected to energy storage elements of a converter stage. Providing auxiliary power to a distributed controller module on the high potential from a central power supply is usually not easy. With the distributed control module as described above and below, energy may be obtainable locally, for example from a DC link of the power electronics building block on the electric potential. This may lead to a further reduction of wiring and to a better integration of the components of the power electronics building block.

Summarized, the distributed controller module may comprise gate drivers, a processor unit, a measurement unit and a power supply on the same board and/or in the same housing. The gate drivers may be closer integrated with the other hardware of the distributed controller. An auxiliary power supply may be directly integrated with the control hardware of the distributed controller module and sensing and protection functions may be realized locally in the distributed controller module. With all these solutions, wiring between distributed components of the control system of the power electronics converter may be reduced.

According to an embodiment of the invention, the processor unit is adapted for processing control data received from the central controller module and is adapted for controlling the gate drivers based on the processed control data. The processor unit may perform control functions in combination with the central controller. For example, the central controller module may receive measurement data generated by all distributed controller modules of the converter, may process the measurement data and may generate control data for the distributed controller.

According to an embodiment of the invention, the processor unit is adapted for exchanging control data with the central controller module for controlling the gate drivers. The distributed controller module may communicate its control data to the central controller module.

According to an embodiment of the invention, the processor unit is adapted for processing measurement data generated by a measurement unit and for locally controlling the gate drivers based on the measurement data. It is also possible that the distributed controller module performs local control based on the measurement data associated with the power electronics building block.

According to an embodiment of the invention, the distributed controller module is adapted for (uniquely) identifying itself at the central controller module via hardware and/or software. All distributed controller modules in a converter may be provided with an identification number that may be implemented into the hardware of the distributed controller module.

A further aspect of the invention relates to a method for distributing control data in a power electronics converter. The method may be performed by a control system of the converter, which at least comprises a central controller module, a first distributed controller module directly connected to the central controller and a second distributed controller only indirectly connected to the central controller module via the first distributed controller module.

According to an embodiment of the invention, the method comprises the steps of: transmitting, via a (first) fiber optics communication line, control data from a central control module to a first distributed controller module of a first power electronics building block of the power electronics converter; evaluating, by a processor unit of the first control module, whether the control data is to be processed in the first distributed controller module or a second distributed controller module of a second power electronics building block of the power electronics converter; and transmitting, via a (second) fiber optics communication line, the control data to the second distributed controller module, if the control data is destined for/to be processed in the second distributed controller module.

In such a way, a data package may be exchanged between the central controller module and the second distributed controller module through a communication channel that is established by the first and second fiber optics communication line. For example, a data package may be identified by the unique identifier of the first or second distributed controller module.

It has to be noted that a full data package or a part of a data package originating from the central controller module may be transmitted to the second distributed controller module. For example, a data package may contain control data for the first distributed controller module and the second distributed controller module.

According to an embodiment of the invention, the method further comprises the step of: controlling gate drivers of the first distributed controller based on the control data, if the control data is for the first distributed controller. If the control data is not transmitted to the second distributed controller module, the control data is used for controlling the power semiconductors associated with the first distributed controller module.

A further aspect of the invention relates to a control system for a power electronics converter, which may comprise at least two distributed controller modules as described in the above and in the following.

For example, the power electronics converter may comprise at least two converter cells, each of which comprises at least a first and a second distributed controller. For example, the converter cell may be an AC-to-DC converter cell and the first distributed controller may be associated with an AC-to-AC subconverter (as a first power electronics building block) and the second distributed controller module may be associated with an AC-to-DC subconverter (as a second power electronics building block) interconnected with the AC-to-AC subconverter.

According to an embodiment of the invention, the control system comprises: first distributed controller modules, each first distributed controller module associated with a first power electronics building block of a converter cell; second distributed controller modules, each second distributed controller module associated with a second power electronics building block of a converter cell; a central controller module for controlling the first distributed controller modules and the second distributed controller modules; first fiber optic communication lines from the central controller module to each first distributed controller module; second fiber optic communication lines between the first distributed controller modules and the second distributed controller modules, wherein a first distributed controller module associated with a first power electronics building block of a converter cell is interconnected with a second distributed controller module associated with a second power electronics building block of the same converter cell.

The control system may thus comprise communication channels connecting two distributed controller modules of the same cell and communication channels connecting the central controller module to each of the first distributed controller modules.

The control system may have a star type topology for the connections between the central controller modules and the first distributed controller modules and a daisy-chain type topology between the distributed controller modules on the level of a converter cell.

It has to be noted that the first and second distributed controller modules may be equally designed and may only differ in the actually running software and/or the number of gate drivers installed in the distributed controller module.

The control system allows for flexible communication connections and has a reduced amount of fiber optical connections. In this way, modularity of a converter may be further improved as the number of communication channels is reduced while reliability of the control system becomes better.

According to an embodiment of the invention, the first power electronics building block and the second power electronics building block are galvanically separated and on different electric potentials during operation of the power electronics converter. Also the central controller module may be galvanically separated from the converter cells.

According to an embodiment of the invention, the first power electronics building block is a first converter stage of a converter cell (for example an AC-to-AC subconverter) and the second power electronics building block is a second converter stage of the converter cell (for example an AC-to-DC subconverter), which is connected to the first converter stage via a transformer.

According to an embodiment of the invention, the control system further comprises a second redundant central controller module; third fiber optic communication lines from the second central controller module to each second distributed controller module; and/or a fourth fiber optic communication line directly connecting the first central controller module and the second central controller module. The control system may also comprise an optional redundant central controller module connected to each of the second distributed controller modules on each cell. There may also be a communication channel connecting the main central controller module and the optional redundant central controller module.

A further aspect of the invention relates to a power electronics converter, which comprises a plurality of converter cells, each converter cell comprising at least a first and a second power electronics building block with power semiconductor switches for switching a current to be processed by the power electronics converter and a control system as described in the above and in the following. The first and a second power electronics building block may be separated by a transformer. The converter cells may be connected in series on an input side of the converter cells and in parallel on an output side of the converter cells.

The power electronics converter may be a modular converter comprising a plurality of converter cells each of which comprises at least one distributed controller which is associated with the converter cell. In particular, each converter cell may comprise at least two power electronics building blocks that have different potentials during operation of the converter. Each power electronics building block may comprise a distributed controller module for controlling the power electronics building blocks. In such a way, the modular power electronics converter also comprises a modular control system.

With such a converter, the number of optical communication lines needed between the distributed controller modules and the main central controller module may be reduced. Furthermore, a distributed controller module for a power electronics building block is not only responsible for calculation and signal processing, but may include gate drivers, a power supply, protection elements and various measurement interfaces towards the different kinds of sensors.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a power converter according to an embodiment of the invention.
Fig. 2 schematically shows a converter cell for the converter of Fig. 1.
Fig. 3 schematically shows another converter cell for the converter of Fig. 1.
Fig. 4 schematically shows a control system according to an embodiment of the invention.
Fig. 5 schematically shows a control system according to an embodiment of the invention.
Fig. 6 schematically shows a control system with distributed controller modules according to an embodiment of the invention.
Fig. 7 schematically shows a control system with distributed controller modules according to an embodiment of the invention.
Fig. 8 schematically shows a distributed controller module according to an embodiment of the invention.
Fig. 9 schematically shows two interconnected distributed controller modules according to an embodiment of the invention.
Fig. 10 shows a method for distributing and processing data in a control system according to an embodiment of the invention.

In principle, identical parts are provided with the same reference symbols in the figures.

### DETAILED DESCRIPTION OF EXEMPLARY EMBODIMENTS

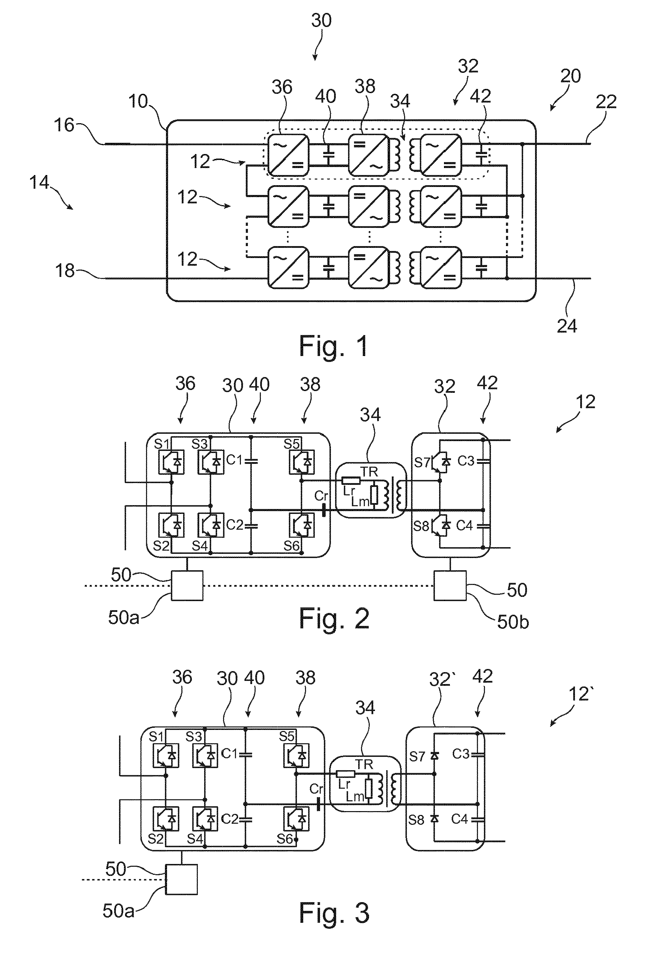

Fig. 1 shows a single phase modular multilevel converter 10 comprising a plurality of converter cells 12.

The modular converter 10 has AC medium voltage terminals on an AC side 14, in particular a first AC terminal 16 and a second AC terminal 18, and low voltage terminals on a DC side 20, in particular a first DC terminal 22 and a second DC terminal 24. A number of converter cells 12 are connected in series on the AC side 14 between the first AC terminal 16 and the second AC terminal 18 in order to meet the AC line voltage between the two terminals 16, 18. The converter cells 12 are connected in parallel on the DC side 20 between the first DC terminal 22 and the second DC terminal 24.

Each of the converter cells 12 comprises an AC-to-AC converter 30 as a first power electronics building block and an AC-to-DC converter 32 as a second power electronics building block, which is connected to the AC-to-AC converter 30 via a medium frequency transformer 34. Because of the transformers 34, the first side 14 of the converter 10 and of each converter cell 12 is galvanically isolated from the second side 20.

The AC-to-AC converter 30 comprises an AC-to-DC converter 36 and a DC-to-AC converter 38 that are interconnected via a first DC link 40. The AC-to-DC converter 32 comprises a second DC link 42 at its output.

Fig. 2 and 3 show different types of converter cells 12 that may be used with the converter 10. The power electronics building block 30 comprises six power semiconductors S1 to S6 and two capacitors C1, C2 for the DC link 40. The power electronics building block 32, 32' comprises two power semiconductors S7, S8 and two capacitors C3, C4 for the DC link 42.

The power electronics building block 30, 32 are on different voltage potentials. The high voltage power electronics building block 30 may have a voltage potential of several kVs (The high voltage power electronics building block 30 of different cells 12 may each be on different voltage potentials). The low voltage power electronics building block 32 may be on ground potential. The medium frequency transformer 34 provides an isolation between the high voltage power electronics building block 30 and the low voltage power electronics building block 32. The combination of high voltage power electronics building block 30, medium frequency transformer 34 and low voltage power electronics building block 32 may be seen as a converter cell 12, 12'.

The power semiconductors S1 to S8 of the converter cell 12 are active (switchable) power semiconductors, for example IGBTs. The converter cell 12 is a bidirectional cell in which both of the power electronics building block 30, 32 are controlled by distributed controller modules 50 as will be explained in the following

The converter cell 12' is a unidirectional cell, which differs from the converter cell 12 in that the power semiconductors S7 and S8 are passive power semiconductors, for example diodes. Although the power electronics building block 32' need not be controlled, the power electronics building block 30 of the converter cell 12' may be controlled by a distributed controller module 50 as described in the following.

The distributed controller modules 50 may be control hardware boards integrated into the power electronics building block 30, 32 and may be on the electric potential of the power electronics building block 30, 32.

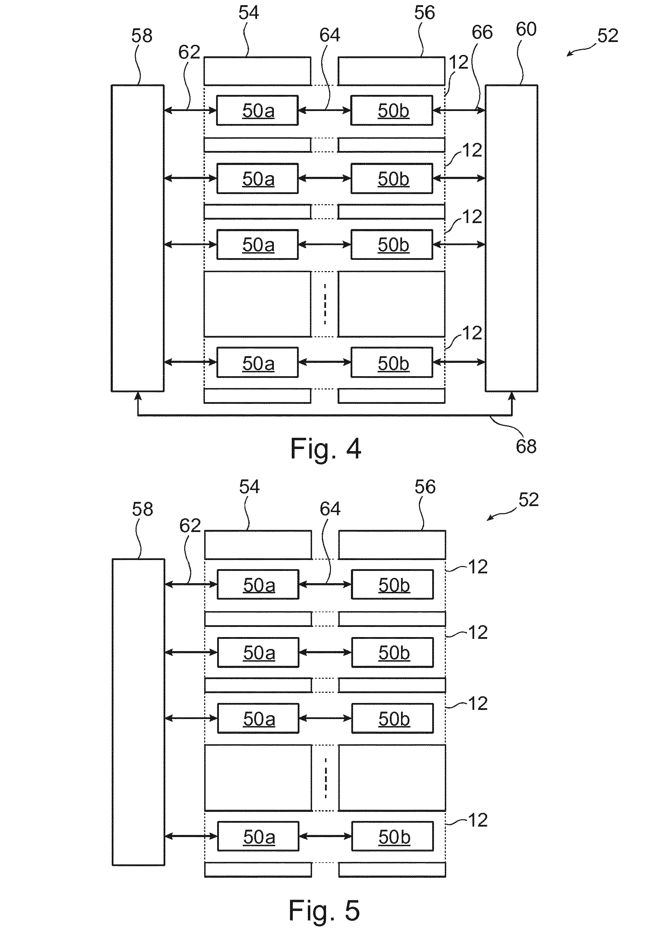

Fig. 4 shows a control system 52 for the converter 10 with converter cells 12. To distinguish between the different types of power electronics building blocks 30, 32, the high voltage potential part 54 and the low voltage potential part 56 of the converter 10 are shown. The high voltage potential part 54 comprises the power electronics building blocks 30 and the low voltage potential part 56 comprises the power electronics building blocks 32.

The control system 52 comprises a (first) central controller module 58, a redundant (second) central controller module 60, and a plurality of distributed controller modules 50a, 50b associated with the power electronics building blocks 30, 32. The distributed controller modules 50a, 50b may be equally designed and only may differ in their number of gate drives and in their software.

Each of the cells 12 comprises two distributed controller modules 50a, 50b, wherein the distributed controller module 50a is integrated in the high voltage power electronics building blocks 30 and the distributed controller module 50b is integrated in the low voltage power electronics building blocks 32. The distributed controller modules 50a, 50b may be physical hardware boards that are integrated into the power electronics building blocks 30, 32 in close proximity of semiconductors. The distributed controller modules 50a, 50b may have the same hardware components but may differ in functionality (for example due to different software).

The control system is configured such that each of distributed controller modules 50a, 50b can communicate with the central controller module 58 (and the redundant central controller module 60) via two-way communication channels that are provided by fiber optic communication lines 62, 64, 66 in order to provide the isolation requirements between the different potentials in the converter 10.

The distributed controller modules 50a are connected in a star configuration with the central controller module 58 via the communication lines 62. In the fully redundant configuration shown in Fig. 4, there is another star type of connection between the redundant controller module 60 and the distributed controller modules 50b via the communication lines 66. Within a converter cell 12, the two distributed controller modules 50a, 50b are connected through a communication line 64.

For example, to keep two central controller modules 58, 60 synchronized, there may be an additional fiber optics communication line 68 connecting the two central controller modules 58, 60.

Fig. 5 shows a control system 52 analogous to the control system of Fig. 4 that has only one central controller module 58 (but does not have a redundant central controller module 60). Again, both power electronics building blocks 30, 32 of each converter cell 12 are equipped with a distributed controller module 50a, 50b. It is important to notice that nothing changes from the point of the converter cells 12. There is still an internal communication line 64 (i.e. a local daisy-chain) and an external communication line 62 for a star connection with the central controller module 58.

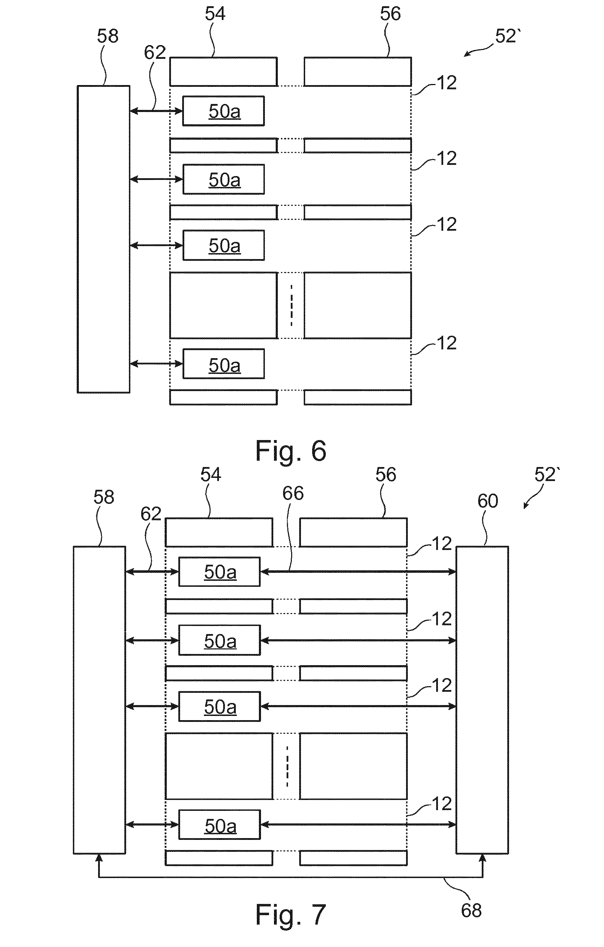

Fig. 6 shows a further control system 52' for a converter 10 with converter cells 12' as shown in Fig. 3. In this case, the power electronics building block 32' does not require a distributed controller module, such as is the case when only passive rectification is used. There is only a star connection between the central controller module 58 and the distributed controller module 50a. However, the same type of distributed controller modules 50a as with the control system 52 may be used

Fig. 7 shows a control system 52' for the case of a system when a distributed controller module 50a is only integrated into the power electronics building block 30 similar to the control system of Fig. 6 and there is a need to implement a redundant central controller module 60. This is realized with the communication lines 66 and the fact that each distributed controller module 50a has at last two fiber optics communication interfaces. The communication interface to be connected to communication line 64 in the system 52 (see Fig. 4 and 5) can take the function of a communication interface to connect to the distributed controller module 50a in star connection with the redundant central controller module 60.

With the distributed controllers 50, 50a, 50b, the topology or the layout of the control system 52, 52' is fully flexible and may be adapted to a variety of converter types and arrangements. The converter system 52, 52' has a minimal number of wiring needed between various control hardware boards supporting the distributed controller modules 50, 50a, 50b.

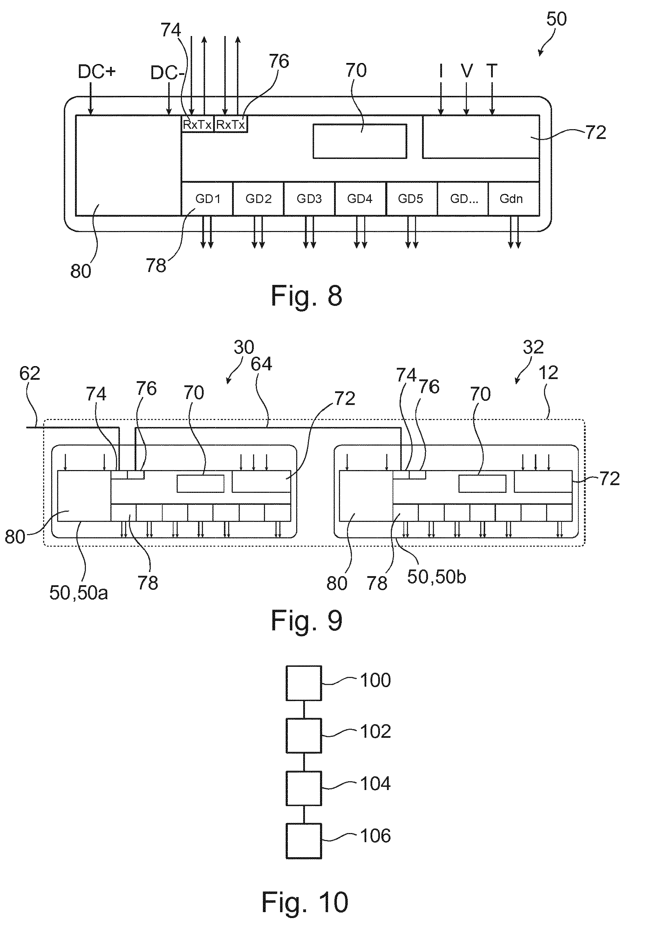

Fig. 8 shows a principal functional layout of a distributed controller module 50. Each power electronics building block 30, 32 may have its own associated distributed controller module 50 as shown in Fig.8 as an integral part.

The distributed controller module 50 comprises a processing unit 70, a measurement unit 72, two fiber optics communication interfaces 74, 76, a plurality of gate drivers 78 and a power supply 80.

The distributed controller module 50 comprises at least two fiber optics communication interfaces 74, 76 for a communication towards the central controller modules 58, 60 and the distributed controller modules 50 of the same converter cell 12. These two fiber optics communication interfaces 74, 76 are configurable to support variation of control hardware layout, as shown in Fig. 4 to 7. With the fiber optics communication interfaces 74, 76, the distributed controller module is adapted to exchange (control and/or measurement) data either within its own converter cell 12 with another distributed controller module 50b or with a central controller module 58.

During data exchange, the distributed controller module 50 is able to uniquely identify itself, for example via hardware, to the central controller module 50.

The processing unit 70 (a digital processing core) may be an FPGA, DSP or microcontroller or combination of any of them to perform various computational tasks in accordance to the desired mode of operation. The processing unit 70 may control the communication interfaces 74, 76 and the communication between the central controller modules 58, 60 and the distributed controller module 50. A communication from the distributed controller module 50 to a central controller module 58, 60 may be performed in such a way that from the point of view of the central controller module 58, 60, a whole converter cell 12 is seen as single logical entity. The corresponding protocols between the distributed controller module 50 and the central controller modules 58, 60 may be standard protocols.

The distributed controller module 50 is adapted to handle incoming/outgoing data from the central controller module 58, 60, but also is adapted to forward/receive the same data or a sub-set of this data to/from another distributed controller module 50. In this way, the central controller module 58, 60 sees the whole converter cell 12 as single entity, which may simplify the communication protocols and the signal routing.

The measurement unit 72 is adapted for the acquisition of various analogue measurement signals locally available on the power electronics building blocks 30, 32. The measurement unit 72 may be adapted for processing signals coming from various sensors/transducers, such as those for voltage, current, temperature, etc. The measurement unit 72 may fulfill protection functions for the power electronics building blocks 30, 32 and/or may deliver measurement values/data for the control application running in the processing unit 70.

The gate drivers 78, GD1 to GDn are integrated into the distributed controller module 50 thus reducing needs for an internal wiring towards a standalone gate drive. The number of gate drives 78 may vary between distributed controller modules 50a, 50b located on the high voltage power electronics building blocks 30 and the low voltage power electronics building blocks 32. This may be the only difference between otherwise identical distributed controller modules 50a, 50b.

With the gate drivers 78, the distributed controller module 50 is so-called "Multi Gate Driver capable" of driving at least one half bridge (i.e. the "top" and "bottom" semiconductor). The hardware design of the distributed controller module 50 may be modular in such a way to allow support of various types of semiconductors with relative ease.

Furthermore, the distributed controller module 50 may comprise an on-board auxiliary power supply 80, which for example may take the energy directly from the DC link 40 of the high voltage power electronics building block 30. For example, with the power supply 80, the distributed controller module 50 may be powered from the +/-DC link voltage rails from within its own converter cell 12.

The power supply 80 may provide a low voltage needed for the electronic circuits of the distributed controller module 50. With a connection to DC link 40, 42, any wiring that have to cross isolation barrier may be avoided.

The auxiliary power supply 80 may be integrated into the distributed controller module 50 or may be a separate device of its own. The power supply 80 may be implemented on the board of the distributed controller module 50 or as a separate board that is located in close proximity to the distributed controller module 50.

Fig. 9 shows a general layout of a converter cell 12 with two distributed controller modules 50a, 50b, which are located on the high voltage power electronics building block 30 and the low voltage power electronics building block 32, respectively. The two distributed controller modules 50a, 50b may be identical in terms of functionalities, but they also may be different in specific aspects, such as the number of gate drivers 78 integrated into each distributed controller module, as this may be adapted to match a particular topology of a power electronics building block 30, 32.

Fig. 9 shows the control arrangement of one converter cell 12. The control system 52 shown in Fig. 4 and 5 may have such a control arrangement for each converter cell 12. In general, when the converter 10 has n converter cells 12, the central controller module 58 has to deal with only n communication interfaces (i.e. n communication lines 62) towards the converter cells 12. This may reduce the communication burden on the central controller 58 and/or may simplify the routing of the signals/trips/faults (in general the measurement and/or control data) coming from the converter cells 12.

Furthermore, by moving more computational tasks into the distributed controller modules 50, 50a, 50b, also the computational burden may be relaxed on the central controller module 58, which then may have mainly supervisory function and, for example, may only have to handle communication with other, extern interfaces.

The hardware layout of the control system 52 is based on the star type connection between the central controller module 58 and the distributed controller module 50a in each converter cell 12. Additionally, a daisy-chain link is established inside each converter cell 12 between two distributed controller modules 50a, 50b. If needed, a communication with a redundant central controller 60 may be established in a similar fashion from the side of the second distributed controller module 50b.

Fig. 10 shows a method for distributing and processing data in the control system 52:

In step 100, control data is transmitted from the central control module 58 to a first distributed controller module 50a associated with the first power electronics building block 30 transmitting, via a fiber optics communication line 62. For example, the control data may contain information about a reference value of the output voltage of a converter cell 12.

After that, the control data is received via the interface 74 in the distributed controller module 50a.

In step 102, the processor unit 70 of the first distributed control module 50a evaluates, whether the control data is to be processed in the first distributed controller module 50a or the second distributed controller module 50b associated with the second power electronics building block 32.

For example, upon receiving a data package from the central controller module 58 through communication line 62, the distributed controller module 50a distinguishes which set of data inside the received data package are for the distributed controller 50a and which ones must be routed further to the distributed controller module 50b.

Similarly, when sending data from the distributed controller module 50a to the central controller module 58, a data package may be assembled with information obtained locally, for example from the power electronics building block 30, and with data received from the distributed controller module 50b through the communication line 64.

In step 104, the processor unit 70 transmits the control data to the second distributed controller module 50b, if the control data is destined for the second distributed controller module 50b.

The control data is received via the interface 74 in the distributed controller module 50a.

In step 106, the control data is used for controlling gate drivers 78 of the first or second distributed controller module 50a, 50b based on the control data. This is either done by the processing unit 70 of the first distributed controller module 50a or the processing unit 70 of the second distributed controller module 50b.

In step 106, the processor unit 70 may perform further control functions for the distributed controller module 50:
The processor unit 70 may provide local protection features/data acting on local measurements of the measurement unit 72 and may optionally transmit these data to the central controller module 58 and/or other distributed controller modules 50.

The processor unit 70 may record signals/data (measurements, software debug points) of the distributed controller module 50 for debugging and maintenance purposes and may optionally transmit these data to the central controller module 58 and/or other distributed controller modules 50.

The processor unit 70 may perform local closed and/or open loop control functions and/or algorithms that ensure for the distributed controller module 50 and the associated power electronics building block 30, 32 like charging, DC-link balancing and/or power supply management.

The processor unit 70 may synchronize the distributed controller modules 50 with the central controller module 58.

In general, the overall converter control (group of converter cells 12) may be performed individually by each distributed controller module 50 or by the central controller module 58. It is also possible that the closed loop converter control is distributed between the central controller module 58 and the distributed controller modules 50.

The control functions may be implemented in software that is processed by the processing unit 70 and by the central controller module 58, which also may have a processing unit analogously to 70.

If present, the redundant central controller module 60 may communicate with the distributed controller modules 50a, 50b and in addition may be kept updated by direct communication line 68 in communication with the central controller module 58. When needed, the redundant central controller module 60 may take the role of the central controller 58.

Summarized, advantages of the proposed control system 52 and the distributed controller modules 50, 50a, 50b may be:
- A significantly reduced wiring effort, which may have a positive impact on the reliability of the converter 10.
- A flexible architecture of the control system 52, 52' that can be easily adapted for various modular converter arrangements.
- An expandable structure due to the local daisy-chaining on the level of the converter cell 12.
- An easy implementation of redundancy with respect to a central controller module 60.
- An integration of several functionalities of the distributed controller module 50, 50a, 50b into one control hardware board, which further may reduce wiring.
- A reduced burden on the central controller module 58.
- A clear and transparent software structure that is not depending on the application or the exact converter topology.
- A good access to every part of the software distributed on several distributed controller modules 50, 50a, 50b for debugging and maintenance purposes.
- An easy implementation of converter control.
- A high possibility of code reusability between applications.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A distributed controller module (50) for controlling a power electronics building block (30) of a power electronics converter (10), the distributed controller module (50) comprising:
a plurality of gate drivers (78) for controlling power electronics switches of the power electronics building block (30);
a first fiber optics communication interface (74) for communication with a central controller module (58);
a second fiber optics communication interface (76) for communication with a second distributed controller module (50b) for controlling a second power electronics building block (32) of the power electronics converter (10);
a processor unit (70) for controlling the gate drivers (78) and transmitting and receiving data via the first fiber optics communication interface (74) and the second fiber optics communication interface (76).

2. The distributed controller module (50) of claim 1,
wherein the plurality of gate drivers (78), the first fiber optics communication interface (74), the second fiber optics communication interface (76) and the processor unit (70) are arranged in one assembly.

3. The distributed controller module (50) of claim 1 or 2, further comprising:
a measurement unit (72) for sensing measurement data of the power electronics building block (30);
wherein the processor unit (70) is adapted for processing the measurement data and to control the gate drives (78) based on the processed measurement data.

4. The distributed controller module (50) of one of the preceding claims, further comprising:
a power supply (80) for supplying the distributed controller module (50) with low voltage power;
wherein the power supply (80) is adapted to generate the low voltage power from energy storage elements of the power electronics building block (30).

5. The distributed controller module (50) of one of the preceding claims,
wherein the processor unit (70) is adapted for processing control data received from the central controller module (58) and is adapted for controlling the gate drivers (78) based on the processed control data.

6. The distributed controller module (50) of one of the preceding claims,
wherein the processor unit (70) is adapted for exchanging control data with the central controller module (58) for controlling the gate drivers (78).

7. The distributed controller module (50) of one of the preceding claims,
wherein the processor unit (70) is adapted for processing measurement data generated by a measurement unit (72) and for locally controlling the gate drivers (78) based on the measurement data.

8. The distributed controller module (50) of one of the preceding claims,
wherein the distributed controller module (50) is adapted for identifying itself at the central controller (58) module via hardware and/or software.

9. A method for distributing control data in a power electronics converter (10), the method comprising the steps of:
transmitting, via a fiber optics communication line (62), control data from a central control module (58) to a first distributed controller module (50a) of a first power electronics building block (30) of the power electronics converter (10);
evaluating, by a processor unit (70) of the first distributed control module (50a), whether the control data is to be processed in the first distributed controller module (50a) or a second distributed controller module (50b) of a second power electronics building block (32) of the power electronics converter (10);
transmitting, via a fiber optics communication line (64), the control data to the second distributed controller module (50b), if the control data is for the second distributed controller module (50b).

10. The method of claim 9, further comprising the step:
controlling gate drivers (78) of the first distributed controller module (50a) based on the control data, if the control data is for the first distributed controller (50a).

11. A control system (52) for a power electronics converter (10), the power electronics converter (10) comprising at least two converter cells (12),
the control system (52) comprising:
first distributed controller modules (50a), each first distributed controller module (50a) associated with a first power electronics building block (30) of a converter cell (12);
second distributed controller modules (50b), each second distributed controller module (50b) associated with a second power electronics building block (32) of a converter cell (12);
a central controller module (58) for controlling the first distributed controller modules (50a) and the second distributed controller modules (50b);
first fiber optic communication lines (62) from the central controller module (58) to each first distributed controller module (50a);
second fiber optic communication lines (64) between the first distributed controller modules (50a) and the second distributed controller modules (50b), wherein a first distributed controller module (50a) associated with a first power electronics building block (30) of a converter cell (12) is interconnected with a second distributed controller module (50b) associated with a second power electronics building block (32) of the same converter cell (12).

12. The control system (52) of claim 11,
wherein the first power electronics building block (30) and the second power electronics building block (32) are galvanically separated and on different electric potentials during operation of the power electronics converter (10);
wherein the central controller module (58) is galvanically separated from the converter cells (12).

13. The control system (52) of claims 11 or 12,
wherein the first power electronics building block (30) is a first converter stage of a converter cell (12) and the second power electronics building block (32) is a second converter stage of the converter cell (12), which is connected to the first converter stage via a transformer (34).

14. The control system (52) of one of the claims 11 to 13, further comprising:
a second redundant central controller module (60);
third fiber optic communication lines (66) from the second central controller module (60) to each second distributed controller module (50b); and/or
a fourth fiber optic communication line (68) directly connecting the first central controller module (58) and the second central controller module (60).

15. A power electronics converter (10), comprising:
a plurality of converter cells (12), each converter cell (12) comprising at least a first and a second power electronics building block (30, 32) with power semiconductor switches for switching a current to be processed by the power electronics converter (10);
a control system (52) according to one of the claims 11 to 14.
